# EUROPEAN PATENT APPLICATION

(11) **EP 4 756 250 A1**
(43) Date of publication of application: **10.06.2026**
(21) Application number: 24848026.1
(22) Date of filing: 16.07.2024
(51) Int. Cl.: F16F 9/34, F16F 9/02, F16F 9/50, B60G 17/056, F16K 1/36

(54) **STIFFNESS CONVERSION VALVE AND VALVE CORE THEREOF, AIR SPRING, SUSPENSION SYSTEM, AND VEHICLE**

(30) Priority: 31.07.2023 CN 202322053567 U
(71) Applicant: BYD Company Limited, Shenzhen, Guangdong 518118 (CN)
(72) Inventor: LIU, Leqiang, Shenzhen, Guangdong 518118 (CN); XU, Min, Shenzhen, Guangdong 518118 (CN); YE, Meijiao, Shenzhen, Guangdong 518118 (CN)
(74) Representative: Mathys & Squire
(86) International application number: PCT/CN2024/105801
(87) International publication number: WO 2025/026067

(57) **Abstract**

A stiffness conversion valve and a valve core thereof, an air spring, a suspension system, and a vehicle are provided. The stiffness conversion valve includes a valve rod and a valve core. The valve core is provided with a first hole, and the valve rod is partially accommodated in the first hole. The valve rod is fixedly connected to a side wall of the first hole. The stiffness conversion valve includes a plurality of first cross sections along an axis perpendicular to the valve rod. A cross-sectional area of the first hole is greater than a cross-sectional area of the valve rod on at least some of the first cross sections.

## Description

### CROSS-REFERENCE TO RELATED APPLICATIONS

The present disclosure claims priority to Chinese Patent Application No. 202322053567.2, filed with the China National Intellectual Property Administration on July 31, 2023 and entitled "STIFFNESS CONVERSION VALVE AND VALVE CORE THEREOF, AIR SPRING, SUSPENSION SYSTEM, AND VEHICLE", which is incorporated herein by reference in its entirety.

### TECHNICAL FIELD

The present disclosure relates to the field of stiffness conversion valve technologies, and in particular, to a stiffness conversion valve and a valve core thereof, an air spring, a suspension system, and a vehicle.

### BACKGROUND

In the related art, a stiffness conversion valve includes a valve core and a valve rod. The valve rod is connected to the valve core. Axial movement of the valve rod may drive the valve core to approach or move away from a valve port, thereby closing or opening the valve port. To ensure reliability of the axial movement of the valve core so as to improve reliability of closing or opening the valve port by the valve core, reliability of connection between the valve core and the valve rod is particularly important.

### SUMMARY

An objective of the present disclosure is to provide a stiffness conversion valve and a valve core thereof, an air spring, a suspension system, and a vehicle. Use of the valve core helps ensure reliability of connection between the valve rod and the valve core.

To achieve the foregoing objective, according to a first aspect of the present disclosure, a stiffness conversion valve is provided. The stiffness conversion valve includes a valve rod and a valve core. The valve core is provided with a first hole, and the valve rod is partially accommodated in the first hole. The valve rod is fixedly connected to a side wall of the first hole. The stiffness conversion valve includes a plurality of first cross sections along an axis perpendicular to the valve rod. A cross-sectional area of the first hole is greater than a cross-sectional area of the valve rod on at least some of the first cross sections.

Optionally, the valve rod is welded to the side wall of the first hole.

Optionally, a part of the valve rod that is accommodated in the first hole is a first rod segment. The cross-sectional area of the first hole is greater than a cross-sectional area of the first rod segment on any one of the first cross sections that passes through the first rod segment.

Optionally, on any one of the first cross sections that passes through the first rod segment, a shape of a cross section of the first rod segment is circular, and a shape of a cross section of the first hole is an axisymmetric shape.

Optionally, the cross section of the first hole includes at least two arc-shaped segments with different curvatures.

Optionally, the cross section of the first hole includes two first arc-shaped segments and two second arc-shaped segments. A curvature of each of the first arc-shaped segments is less than a curvature of each of the second arc-shaped segments. The first arc-shaped segments and the second arc-shaped segments are alternately connected in sequence.

Optionally, the side wall of the first hole includes a first part welded to the first rod segment and a second part having a gap with the first rod segment. A curvature of the first part is less than a curvature of the second part.

Optionally, the first hole includes a first sub-hole and a second sub-hole. The first sub-hole is spaced apart from the second sub-hole, and a side wall of the first sub-hole communicates with a side wall of the second sub-hole through a through hole.

Optionally, the valve core is disposed in a valve core accommodating cavity of the stiffness conversion valve. The valve core accommodating cavity is separated into a first sub-chamber and a second sub-chamber, and the first sub-chamber communicates with the second sub-chamber through the first hole.

Optionally, the part of the valve rod that is accommodated in the first hole is the first rod segment. The cross-sectional area of the first hole is equal to the cross-sectional area of the valve rod on some of the plurality of first cross sections that pass through the first rod segment.

Optionally, the first hole includes at least a first segment and a second segment in an axial direction of the valve rod. A cross-sectional area of the first segment is less than a cross-sectional area of the second segment. A side wall of the first segment is welded to the valve rod.

According to a second aspect of the present disclosure, a valve core is provided, and the valve core is the valve core of the foregoing stiffness conversion valve.

According to a third aspect of the present disclosure, an air spring is provided. The air spring includes a housing and the foregoing stiffness conversion valve. The stiffness conversion valve is disposed in the housing. A main air chamber and an auxiliary air chamber are disposed inside the housing. The main air chamber communicates with the auxiliary air chamber through a gas passage. The stiffness conversion valve is configured to implement opening or cutting off of the gas passage.

According to a fourth aspect of the present disclosure, a suspension system is provided. The suspension system includes the foregoing air spring.

According to a fifth aspect of the present disclosure, a vehicle is provided. The vehicle includes the foregoing suspension system, or the foregoing air spring; or the foregoing stiffness conversion valve.

In the stiffness conversion valve provided in the present disclosure, a side wall of the valve rod is fixedly connected to the first hole, for example, through welding or adhesive bonding, so that reliability of connection between the valve rod and the first hole can be ensured, thereby helping ensure reliability of movement of the valve core for opening or closing a valve port on the stiffness conversion valve.

In addition, the cross-sectional area of the first hole is greater than the cross-sectional area of the valve rod on at least some of the first cross sections of the stiffness conversion valve. Therefore, based on proper design of the part of the valve rod that is accommodated in the first hole and a dimension of the first hole, when the valve rod and the valve core are assembled, the valve rod is easily inserted into the first hole, and an operation such as welding or adhesive bonding is easily performed, thereby helping reduce difficulty in assembling the valve rod and the valve core.

Other features and advantages of the present disclosure are described in detail in the DESCRIPTION OF EMBODIMENTS section below.

### BRIEF DESCRIPTION OF DRAWINGS

The accompanying drawings are intended to provide a further understanding of the present disclosure and constitute a part of the specification. The accompanying drawings and the following specific implementations are jointly intended to explain the present disclosure, but do not constitute a limitation on the present disclosure. In the accompanying drawings:
FIG. 1 is a longitudinal sectional schematic view of a stiffness conversion valve according to an implementation of the present disclosure, where a valve core is at a position at which a valve port is closed;
FIG. 2 is a schematic three-dimensional diagram in which a valve core of a stiffness conversion valve, an anti-collision pad, and a sealing pad are in an assembled state according to an implementation of the present disclosure;
FIG. 3 is a schematic top view of a valve core of a stiffness conversion valve according to an implementation of the present disclosure, where a sealing pad is further shown;
FIG. 4 is a schematic diagram of a cross section of a first hole on a valve core at a first cross section according to an implementation of the present disclosure;
FIG. 5 is a schematic sectional view along an A-A line in FIG. 3;
FIG. 6 is a longitudinal sectional schematic view in which a valve core and a valve rod are in an assembled state according to an implementation of the present disclosure;
FIG. 7 is a schematic three-dimensional diagram in which a valve core of a stiffness conversion valve, an anti-collision pad, and a sealing pad are in an assembled state according to another implementation of the present disclosure;
FIG. 8 is a longitudinal sectional schematic view in which a valve core and a valve rod are in an assembled state according to another implementation of the present disclosure;
FIG. 9 is a longitudinal sectional schematic view in which a valve core and a valve rod are in an assembled state according to still another implementation of the present disclosure;
FIG. 10 is a schematic sectional view of an air spring according to an implementation of the present disclosure;
FIG. 11 is a schematic structural block diagram of a suspension system according to an implementation of the present disclosure; and
FIG. 12 is a schematic structural block diagram of a vehicle according to an implementation of the present disclosure.

### DESCRIPTION OF EMBODIMENTS

Specific implementations of the present disclosure are described in detail below with reference to the accompanying drawings. It will be understood that the specific implementations described herein are merely intended to describe and explain the present disclosure and are not intended to limit the present disclosure.

In the description of the present disclosure, it will be understood that the orientations or positional relationships indicated by the terms "upper", "lower", and the like are defined based on the drawing direction shown in the accompanying drawings, and are only for ease of describing the present disclosure and simplifying the description, rather than indicating or implying that an indicated apparatus or element must have a specific orientation or must be constructed and operated in a specific orientation. Therefore, these terms will not be understood as a limitation on the present disclosure. The terms "inside" and "outside" refer to the inside and outside of a contour of a corresponding structure. In addition, the terms "first", "second" and the like are merely intended to distinguish one element from another element, and do not have an order or importance.

In the descriptions of the present disclosure, it should be further noted that, unless otherwise specified and defined explicitly, terms "dispose", "connect", "communicate", and "mount" will be understood in a broad sense, for example, may be a fixed connection, a detachable connection, or an integrated connection, may be a direct connection or an indirect connection by using an intermediate medium. A person of ordinary skill in the art may understand specific meanings of the foregoing terms in the present disclosure based on a specific situation.

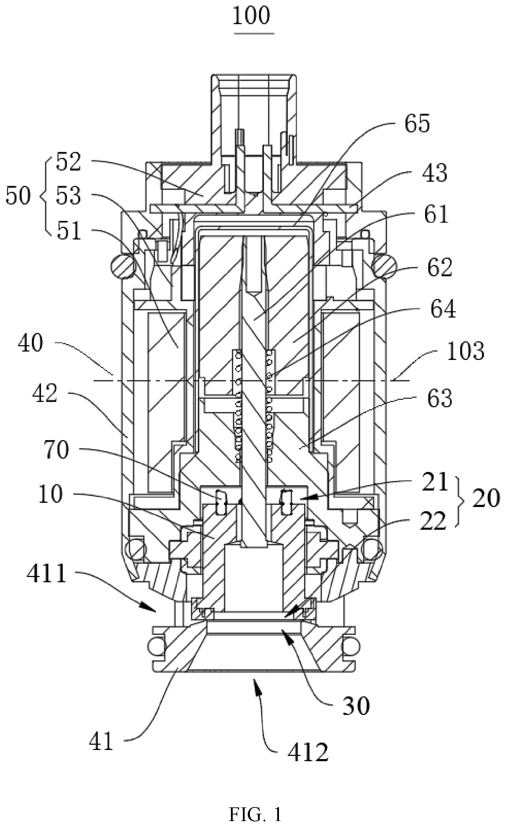

As shown in FIG. 1 to FIG. 12, the present disclosure provides a stiffness conversion valve 100 and a valve core 10 thereof. The stiffness conversion valve 100 may be an electric valve, a mechanical valve, a pneumatic valve, or the like. This is not limited in the present disclosure.

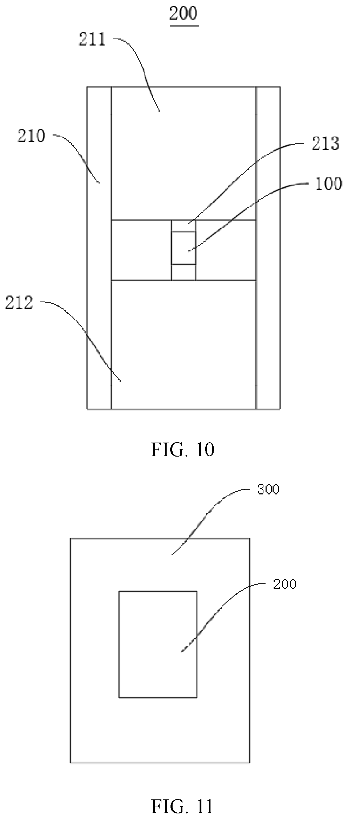

The stiffness conversion valve is a valve configured to convert stiffness of an application object (for example, a suspension system 300). Referring to FIG. 10 to FIG. 12, in an air spring 200 of a suspension system 300 of a vehicle 400, the stiffness conversion valve 100 may be used to implement communication between a main air chamber 211 and an auxiliary air chamber 212 of the air spring 200, or to cut off the communication between the main air chamber 211 and the auxiliary air chamber 212 (even if the main air chamber 211 and the auxiliary air chamber 212 of the air spring 200 do not communicate with each other), so that the suspension system 300 can implement conversion between different stiffness.

As shown in FIG. 1 to FIG. 9, the stiffness conversion valve 100 provided in the present disclosure may include a valve rod 61 and a valve core 10. The valve core 10 is provided with a first hole 11, and the valve rod 61 is partially accommodated in the first hole 11. The valve rod 61 is fixedly connected to a side wall of the first hole 11. The stiffness conversion valve 100 includes a plurality of first cross sections 103 along an axis perpendicular to the valve rod 61. A cross-sectional area of the first hole 11 is greater than a cross-sectional area of the valve rod 61 on at least some of the first cross sections 103.

Referring to FIG. 1, the stiffness conversion valve 100 may further include a valve housing 40. The stiffness conversion valve 100 has a valve core accommodating cavity 20. The valve core 10 is located inside the valve housing 40, and specifically, located in the valve core accommodating cavity 20. A valve port 30 is formed on the valve housing 40. Under driving of the valve rod 61, the valve core 10 may fit with the valve port 30 of the stiffness conversion valve 100 to close or open the valve port 30.

In the stiffness conversion valve 100 provided in the present disclosure, a side wall of the valve rod 61 is fixedly connected to the first hole 11, for example, through welding or adhesive bonding, so that reliability of connection between the valve rod 61 and the first hole 11 can be ensured, thereby helping ensure reliability of movement of the valve core 10 for opening or closing the valve port 30 on the stiffness conversion valve 100.

In the related art, an interference fit is employed between the valve rod and a mounting hole on the valve core. However, the connection achieved through the interference fit leads to insufficient reliability of the connection. In addition, the interference fit employed between the valve rod and the mounting hole on the valve core makes it difficult to insert the valve rod into the mounting hole, resulting in difficulty in assembling the valve rod and the valve core.

However, in the stiffness conversion valve 100 provided in the present disclosure, the cross-sectional area of the first hole 11 is greater than the cross-sectional area of the valve rod 61 on at least some of the first cross sections 103 of the stiffness conversion valve 100. Therefore, based on proper design of a part (for example, a first rod segment 61 described below) of the valve rod 61 that is accommodated in the first hole 11 and a dimension of the first hole 11, when the valve rod 61 and the valve core 10 are assembled, the valve rod 61 is easily inserted into the first hole 11, thereby helping reduce difficulty in assembling the valve rod 61 and the valve core 10. For example, when the cross-sectional area of the first hole 11 is greater than the cross-sectional area of the valve rod 61 on any first cross section 103 passing through the part of the valve rod 61 that is accommodated in the first hole 11, or when the cross-sectional area of the first hole 11 is greater than the cross-sectional area of the valve rod 61 on a first cross section 103 passing through an opening end of the first hole 11 into which the valve rod 61 is inserted, making the opening end in a shape of a horn, the valve rod 61 is easily inserted into the first hole 11, thereby helping reduce the difficulty in assembling the valve rod 61 and the valve core 10.

It will be understood from the foregoing description that, based on proper design of the part of the valve rod 61 that is accommodated in the first hole 11 and the dimension of the first hole 11, in the stiffness conversion valve 100 provided in the present disclosure, the reliability of the connection between the valve rod 61 and the valve core 10 can be ensured, and convenience of assembling the valve rod 61 and the valve core 10 is further ensured.

To improve the reliability of assembling the valve rod 61 and the valve core 10, and avoid wobbling of the valve rod 61 within the first hole 11, in an implementation of the present disclosure, the valve rod 61 may be welded to the side wall of the first hole 11, for example, through brazing. In other words, at least a part of the side wall of the valve rod 61 accommodated in the first hole 11 is welded to the side wall of the first hole 11.

In the related art, because the valve rod and the mounting hole are interference-fitted, gas blockage and pressure accumulation generated during welding tend to cause deformation of the valve core and the valve rod.

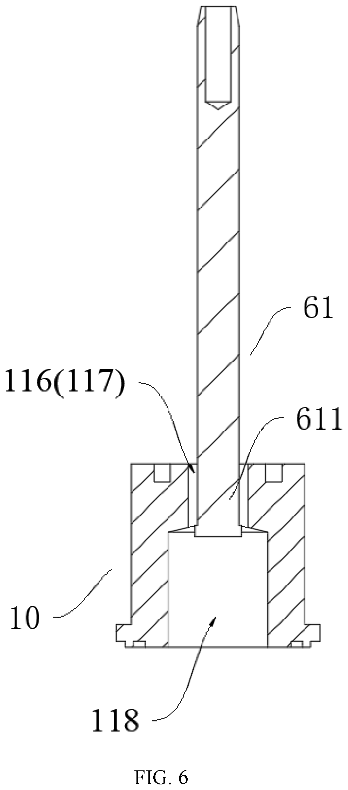

In the present disclosure, as shown in FIG. 1, FIG. 6, FIG. 8, and FIG. 9, the part of the valve rod 61 that is accommodated in the first hole 11 may be referred to as a first rod segment 611, and a part of the valve rod 61 that is located outside the first hole 11 may be referred to as a second rod segment. In an optional implementation, as shown in FIG. 6, the cross-sectional area of the first hole 11 is greater than a cross-sectional area of the first rod segment 611 on any first cross section passing through the first rod segment 611. In this design, as shown in FIG. 6, an axial through hole with an opening extending to at least one axial end surface of the valve core 10 exists between a side wall of the first rod segment 611 and the side wall of the first hole 11. When the valve rod 61 is connected to an inner wall of the first hole 11 through welding, the gas generated during welding may be discharged from the first hole 11 through the axial through hole, so as to prevent gas blockage and pressure accumulation generated during welding, thereby helping ensure welding quality and further improving the reliability of the connection between the valve rod 61 and the valve core 10. This helps ensure concentricity between the valve core 10 and the valve rod 61.

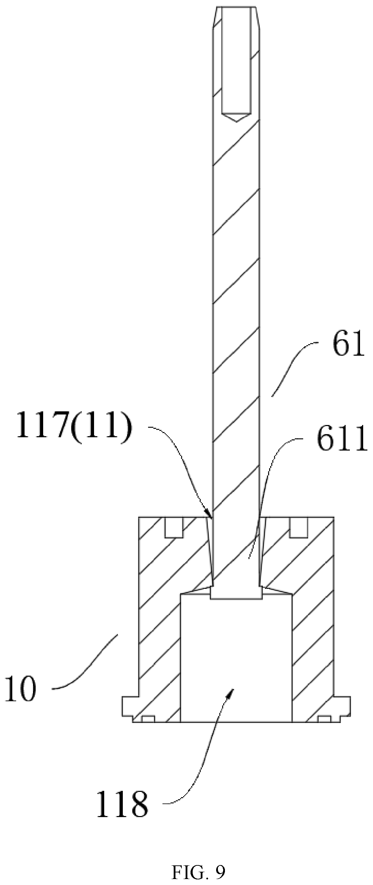

It will be understood that, in another optional implementation of the present disclosure, the cross-sectional area of the first hole 11 is greater than the cross-sectional area of the first rod segment 611 only on some of a plurality of first cross sections 103 passing through the first rod segment 611. The cross-sectional area of the first hole 11 is equal to the cross-sectional area of the first rod segment 611 on some first cross sections 103. This is not limited in the present disclosure. For example, in an implementation shown in FIG. 9, the cross-sectional area of the first hole 11 is equal to the cross-sectional area of the first rod segment 611 on some of the plurality of first cross sections passing through the first rod segment 611.

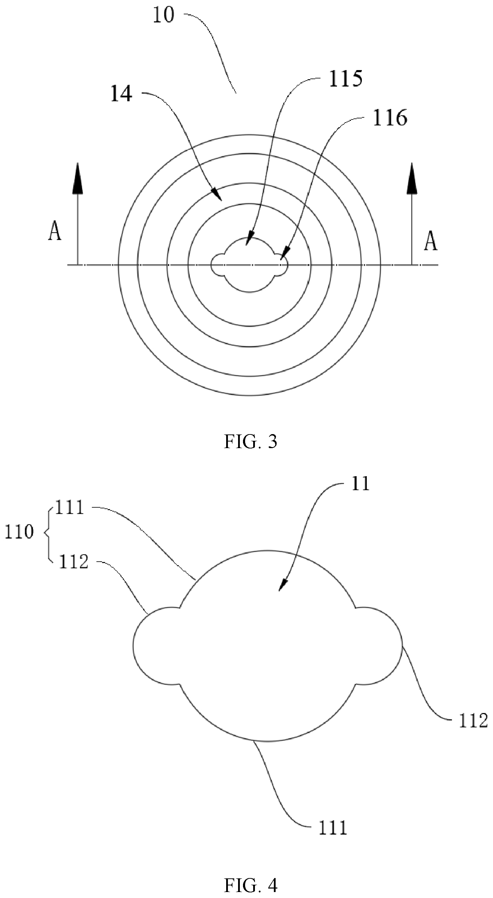

A shape of a cross section of the first rod segment 611 and a shape of a cross section of the first hole 11 are not limited in the present disclosure, and may be any suitable shape. Optionally, as shown in FIG. 6, FIG. 8, and FIG. 9, in some implementations of the present disclosure, on any first cross section passing through the first rod segment 611, the shape of the cross section of the first rod segment 611 may be circular, and the shape of the cross section of the first hole 11 may be an axisymmetric shape. For example, the shape of the cross section of the first hole 11 may be an axisymmetric shape with an axis of symmetry extending along the horizontal direction and/or vertical direction shown in FIG. 3 and FIG. 4. Forming an axisymmetric shape facilitates processing.

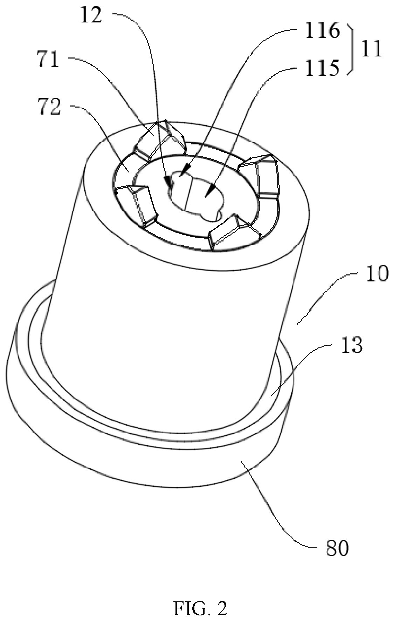

In addition, in an implementation in which the first hole 11 is used to implement communication between a first sub-chamber 21 and a second sub-chamber 22 of a valve core accommodating cavity 20, this design further helps ensure the communication between the first sub-chamber 21 and the second sub-chamber 22, thereby helping reduce a pressure difference between the first sub-chamber 21 and the second sub-chamber 22, and further improving smoothness of the movement of the valve core 10. As shown in FIG. 2 to FIG. 4, the cross section of the first hole 11 may include at least two arc-shaped segments 110 with different curvatures. In other words, the side wall of the first hole 11 may have arc-shaped parts with different bending degrees in a circumferential direction of the first hole 11. In this way, when the shape of the cross section of the first rod segment 611 is circular, and the first rod segment 611 and the first hole 11 are in an assembled state, an outer side wall of the first rod segment 611 can be at most in contact with a part of the side wall of the first hole 11 in a circumferential direction, for example, in contact with an arc-shaped part with a large curvature radius on the first hole 11. The foregoing axial through hole capable of being used to discharge a welding gas exists between the first rod segment 611 and the first hole 11.

A quantity of arc-shaped segments 110 with different curvatures is not limited in the present disclosure. As shown in FIG. 3 and FIG. 4, in an implementation of the present disclosure, the cross section of the first hole 11 may include two first arc-shaped segments 111 and two second arc-shaped segments 112. In other words, the arc-shaped segments 110 may include two first arc-shaped segments 111 and two second arc-shaped segments 112, and a curvature of each of the first arc-shaped segments 111 is less than a curvature of each of the second arc-shaped segments 112. In other words, a curvature radius of the first arc-shaped segment 111 is greater than a curvature radius of the second arc-shaped segment 112. The first arc-shaped segments 111 and the second arc-shaped segments 112 may be alternately connected in sequence. In other words, one first arc-shaped segment 111 of the two first arc-shaped segments 111 is connected between respective ends of the two second arc-shaped segments 112, and the other first arc-shaped segment 111 of the two first arc-shaped segments 111 is connected between other respective ends of the two second arc-shaped segments 112.

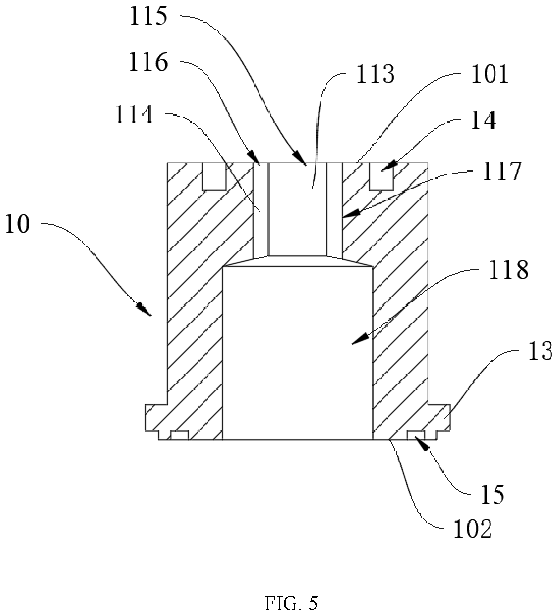

In this way, as shown in FIG. 5 and FIG. 6, when the first rod segment 611 and the first hole 11 are in an assembled state, the outer side wall of the first rod segment 611 is in contact with the part of the side wall at which the first arc-shaped segments 11 are located, and the foregoing axial through hole capable of being used to discharge the welding gas is defined between the outer side wall of the first rod segment 611 and the part of the side wall at which the second arc-shaped segments 112 are located. The first hole 11 is provided with two first arc-shaped segments 111 and two second arc-shaped segments 112, so as to achieve purposes of mounting the valve rod 61 and defining the axial through hole, and ensure that a structure of the first hole 11 is simple and easy to process.

As shown in FIG. 5, the side wall of the first hole 11 may include a first part 113 welded to the first rod segment 611 and a second part 114 having a gap with the first rod segment 611. A curvature of the first part 113 is less than a curvature of the second part 114. In other words, a curvature radius of the first part 113 is greater than a curvature radius of the second part 114. Because the first hole 11 has the second part in clearance fit with the first rod segment 611 of the valve rod 61, the foregoing axial through hole can be formed between the outer side wall of the first rod segment 611 and the second part 114.

It will be understood that, in addition to being used to discharge the gas generated during welding, the axial through hole may further expand solder accommodating space. When the first part 113 is welded to the first rod segment 611, the axial through hole may be used to accommodate solder. Therefore, an appropriate amount of solder may be added to improve reliability of welding between the first rod segment 611 and the first hole 11.

Herein, referring to FIG. 3 to FIG. 5, the first part 113 of the first hole 11 may be a part that includes the first arc-shaped segments 111 and that is on the side wall of the first hole 11, and the second part 114 may be a part that includes the second arc-shaped segments 112 and that is on the side wall of the first hole 11.

In the present disclosure, as shown in FIG. 2, FIG. 4, FIG. 5, FIG. 7, and FIG. 8, in some implementations of the present disclosure, the first hole 11 may include a first sub-hole 115 and a second sub-hole 116. The first sub-hole 115 is spaced apart from the second sub-hole 116, and a side wall of the first sub-hole 115 communicates with a side wall of the second sub-hole 116 through a through hole 12.

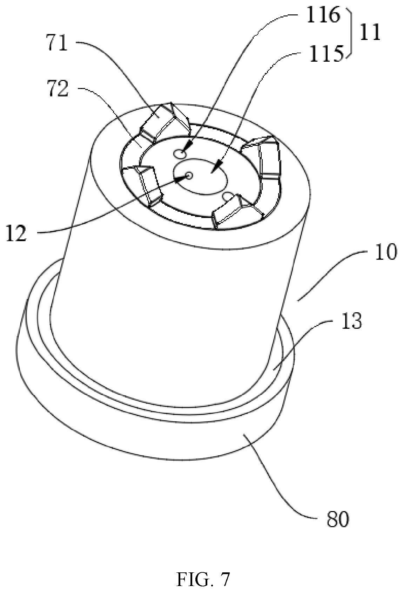

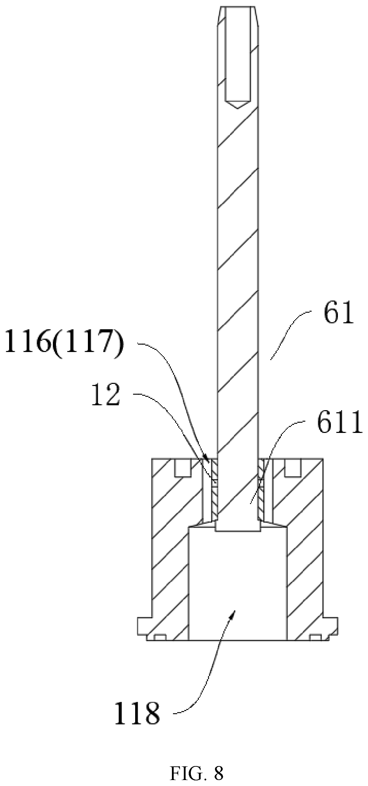

It will be understood that, communication between the side wall of the first sub-hole 115 and the side wall of the second sub-hole 116 through the through hole 12 may include a manner of communication between the first sub-hole 115 and the second sub-hole 116 shown in FIG. 2 and FIG. 5, or may include a manner of communication between the first sub-hole 115 and the second sub-hole 116 shown in FIG. 7 and FIG. 8. In an implementation shown in FIG. 2 and FIG. 5, a side wall shared by the first sub-hole 115 and the second sub-hole 116 is completely eliminated. In other words, it is equivalent to that the second sub-hole 116 is directly formed on the side wall of the first sub-hole 115. In this case, the through hole 12 that implements communication between the first sub-hole 115 and the second sub-hole 116 is constructed as a slot hole extending along an axial direction of the valve core 10. In an implementation shown in FIG. 7 and FIG. 8, the side wall shared by the first sub-hole 115 and the second sub-hole 116 is not eliminated, and the through hole 12 is a radially extending hole disposed on the shared side wall.

In the present disclosure, as shown in FIG. 1, the valve core may separate the valve core accommodating cavity 20 into the first sub-chamber 21 and the second sub-chamber 22, and the first sub-chamber 21 communicates with the second sub-chamber 22 through the first hole 11. The first sub-chamber 21 may communicate with the valve port 30, and the second sub-chamber 22 may communicate with a chamber in which a core iron 62 of the stiffness conversion valve 100 is located.

Because the first sub-chamber 21 communicates with the second sub-chamber 22 through the first hole 11, in an implementation shown in FIG. 1, FIG. 5, and FIG. 6, when a gap extending axially through the valve core 10 exists between the first rod segment 611 of the valve rod 61 and the side wall of the first hole 11, that is, when the cross-sectional area of the first hole 11 is greater than the cross-sectional area of the valve rod 61 on any first cross section passing through the first rod segment 611, the first hole 11 may be used as a balance hole to prevent a pressure difference from forming between the first sub-chamber 21 and the second sub-chamber 22 due to volume changes in the valve core accommodating cavity 20 during the movement of the valve core 10, thereby avoiding impact of the pressure difference on smoothness of the movement of the valve core 10, that is, avoiding degradation of the smoothness of the movement of the valve core 10 caused by the pressure difference.

It should be noted that, in some implementations of the present disclosure, the first hole 11 may be used only as a mounting hole for mounting the valve rod 61, and is not used as the foregoing balance hole. In other words, the cross-sectional area of the first hole 11 is equal to the cross-sectional area of the valve rod 61 on some of the plurality of first cross sections passing through the first rod segment 611 of the valve rod 61. As shown in FIG. 9, on a first cross section, a cross-sectional area of a lower part of a first segment 117 of the first hole 11 is equal to the cross-sectional area of the first rod segment 611. In this way, the first hole 11 does not play a role in communication between the first sub-chamber 21 and the second sub-chamber 22.

Optionally, as shown in FIG. 5, FIG. 6, FIG. 8, and FIG. 9, the first hole 11 includes at least the first segment 117 and a second segment 118 in an axial direction of the valve rod 61. A cross-sectional area of the first segment 117 is less than a cross-sectional area of the second segment 118. A side wall of the first segment 117 is welded to the valve rod 61. For example, the first segment 117 may be welded to the first rod segment 611 of the valve rod 61. The second segment 118 is disposed, and an end of the second segment 118 that is away from the first segment 117 extends to an end surface (for example, a second end surface 102 in FIG. 5) of the valve core 10 that is away from the valve rod 61. In this case, the valve rod 61 can be welded to the side wall of the first segment 117 by using the second segment 118 in a process of assembling the valve rod 61 and the valve core 10, thereby facilitating assembling of the valve rod 61 and the valve core 10. In addition, design of the second segment 118 on the first hole 11 further facilitates light weighting of the valve core 10.

When the first hole 11 is processed, an injection molding manner may be used, or a tool such as a drill bit may be used. This is not limited in the present disclosure. In an implementation shown in FIG. 2 to FIG. 6 in which the cross section of the first hole 11 includes two first arc-shaped segments 111 and two second arc-shaped segments 112, the first hole 11 may be obtained through processing by using a common circular drill bit.

As shown in FIG. 1, FIG. 2, and FIG. 7, the stiffness conversion valve 100 may further include an anti-collision pad 70 (which may also be referred to as a cushion pad). The anti-collision pad 70 may be disposed at a first end of the valve core 10 in an axial direction, and is configured to be in contact with an inner wall of the second sub-chamber 22. Disposing the anti-collision pad 70 can reduce noise generated when the valve core 10 collides with an inner wall (for example, an upper inner wall in a drawing direction of FIG. 1) of the valve core accommodating cavity 20, and protect both the valve core 10 and a structure (for example, a valve seat 61) forming the valve core accommodating cavity 20. The anti-collision pad 70 may include an abutment part 71 configured to abut against the inner wall of the valve core accommodating cavity 20.

The anti-collision pad 70 may be secured to the valve core 10 in any proper manner. This is not limited in the present disclosure. Optionally, as shown in FIG. 5, a mounting groove 14 is disposed on a first end surface 101 of the valve core 10. A body 72 (for example, a ring-shaped structure) of the anti-collision pad 70 may be adhesively bonded or integrally formed (for example, through injection molding) within the mounting groove 14.

As shown in FIG. 1, FIG. 2, and FIG. 7, the stiffness conversion valve 100 may further include a sealing pad 80. The sealing pad 80 is disposed at a second end of the valve core 10 that is axially opposite to the first end. This sealing pad 80 is used for sealing the valve port 30 of the stiffness conversion valve 100 to ensure reliability of closing the valve port 30.

The sealing pad 80 may be secured to the valve core 10 in any proper manner. Optionally, as shown in FIG. 2, in an implementation of the present disclosure, an annular boss 13 is formed at an end of the valve core 10 that is axially away from the anti-collision pad 70. The sealing pad 80 is annular and is sleeved on the annular boss 13, and an opening corresponding to the second segment 118 is disposed on the sealing pad 80. A concave part 15 is disposed on a second end surface 102 of the valve core 10. The concave part 15 may engage in an insertion fit with a convex part of the sealing pad 80, so as to improve reliability of connection between the sealing pad 80 and the valve core 10. Optionally, the convex part may be adhesively bonded or integrally formed (for example, through injection molding) in the concave part 15.

A specific structure of the stiffness conversion valve 100 is not limited in the present disclosure. Optionally, as shown in FIG. 1, the valve housing 40 of the stiffness conversion valve 100 includes a base 41 and an outer housing 42. The stiffness conversion valve 100 includes a valve body assembly 60, and further includes a coil assembly 50. The valve body assembly 60 includes the valve core 10, the valve rod 61, and the core iron 62 described above, as well as a valve seat 63 and an elastic member 64. The core iron 62 is movably arranged inside the outer housing 42. The valve core accommodating cavity 20 is formed between the valve seat 63 and the base 41. The valve core 10 is accommodated in the valve core accommodating cavity 20. The valve rod 61 passes through the valve seat 63. The valve core 10 is connected to the core iron 62 by using the valve rod 61. The coil assembly 50 is disposed on an outer side of the core iron 62, to provide a magnetic force for moving the core iron 62 toward the valve port. The elastic member 64 is connected between the core iron 62 and the valve seat 63 and is configured to provide a restoring force to the core iron 62. The base 41 is provided with a first opening 411 and a second opening 412, and the first opening 411 communicates with the second opening 412 through the valve port 30.

When the coil assembly 50 is in a power-off state, the valve core 10 may be maintained, under action of the elastic member 64, at a position at which the valve port 30 is opened. When the valve port 30 needs to be closed, the coil assembly 50 may be energized to generate a magnetic field to overcome the elastic force of the elastic member 64, the core iron 62 is driven to move toward a side of the base 41, and the valve core 10 seals against the base 41. In this way, the valve port 30 can be closed, thereby cutting off communication between the first opening 411 and the second opening 412. When the coil assembly 50 is powered off, under action of the elastic member 64, the core iron 62 may move in a direction away from the valve port 30, and the valve port 30 is re-opened, so as to implement the communication between the first opening 411 and the second opening 412.

The elastic member 64 may be a spring, a spring sheet, an elastic block, or the like. This is not limited in the present disclosure.

As shown in FIG. 1, the coil assembly 50 may include a coil 51, a terminal 52, and a magnetic conductive ring 53. The valve housing 40 may further include a sealing seat 43. The valve body assembly 60 may further include a magnetic insulator 65. The magnetic insulator 65 is sleeved outside the core iron 62, and a lower end of the magnetic insulator 65 is connected to the valve seat 63. The magnetic conductive ring 53 is disposed between the terminal 52 and the coil 51. The coil 51 is electrically connected to the terminal 52, and is sleeved on the magnetic insulator 65. The sealing seat 43 is connected to an upper end of the outer housing 42. The terminal 52 passes through the sealing seat 43, so as to be electrically connected to a power supply structure. In this way, the outer housing 42 can combine the base 41, the valve core 10 assembly, and the coil assembly 50 together, and the sealing seat 43 is secured around a periphery of the outer housing 42 and the coil assembly 50. Disposing the magnetic insulator 65 can effectively reduce magnetic flux leakage from a core, and improve efficiency and sensitivity of the stiffness conversion valve 100.

In the present disclosure, an object using the stiffness conversion valve 100 is not limited. The stiffness conversion valve 100 may be applied to any suitable object, for example, the stiffness conversion valve 100 may be applied to an air spring, to implement communication and cutting off of a main air chamber and an auxiliary air chamber of the air spring. Alternatively, the stiffness conversion valve 100 may be applied to another structure in a vehicle that is suitable for using a stiffness conversion valve to convert stiffness.

As shown in FIG. 10, according to another aspect of the present disclosure, an air spring 200 is provided. The air spring 200 includes a housing 210 and the foregoing stiffness conversion valve 100. The stiffness conversion valve 100 is disposed in the housing 210. A main air chamber 211 and an auxiliary air chamber 212 are disposed inside the housing 210. The main air chamber 211 communicates with the auxiliary air chamber 212 through a gas passage 213, and the stiffness conversion valve 100 is configured to implement opening and cutting off of the gas passage 213.

In an implementation in which the stiffness conversion valve 100 is applied to the air spring 200, a first opening 411 may communicate with one of the main air chamber 211 and the auxiliary air chamber 212 of the air spring 200, and a second opening 412 may communicate with the other of the main air chamber 211 and the auxiliary air chamber 212 of the air spring 200. For example, the first opening 411 communicates with the auxiliary air chamber 212, and the second opening 412 communicates with the main air chamber 211 of the air spring 200. In this way, driving the movement of the valve core 10 can implement the communication or cutting off of the main air chamber 211 and the auxiliary air chamber 212.

It will be understood that, in addition to being applied to a suspension system 300, the air spring 200 provided in the present disclosure may be applied to another object, for example, to a support rod for a vehicle door.

As shown in FIG. 11, according to still another aspect of the present disclosure, a suspension system 300 is provided. The suspension system 300 includes the foregoing air spring 200, and the suspension system 300 is configured to be arranged between a vehicle body and an axle of a vehicle 400.

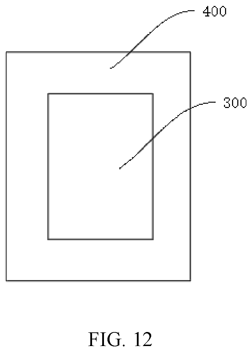

As shown in FIG. 12, according to yet another aspect of the present disclosure, a vehicle is provided. The vehicle includes any one or more of the stiffness conversion valve 100, the air spring 200, and the suspension system 300 described above.

The foregoing describes in detail the preferred implementations of the present disclosure with reference to the accompanying drawings. However, the present disclosure is not limited to specific details in the foregoing implementations. A plurality of simple variations can be made to the technical solutions of the present disclosure within the technical concept scope of the present disclosure, and all these simple variations fall within the protection scope of the present disclosure.

Moreover, it should be noted that various specific technical features described in the foregoing specific implementations can be combined in any suitable manner without contradiction, and to avoid unnecessary repetition, various possible combinations are not separately explained in the present disclosure.

In addition, the various different implementations of the present disclosure may also be combined in any manner, and the combination should also be considered as content disclosed in the present disclosure provided that the combination does not deviate from the idea of the present disclosure.

## Claims

1. A stiffness conversion valve (100), comprising:
a valve rod (61); and
a valve core (10), the valve core (10) being provided with a first hole (11), the valve rod (61) being partially accommodated in the first hole (11), the valve rod (61) being fixedly connected to a side wall of the first hole (11), the stiffness conversion valve (100) comprising a plurality of first cross sections (103) along an axis perpendicular to the valve rod (61), and a cross-sectional area of the first hole (11) being greater than a cross-sectional area of the valve rod (61) on at least some of the first cross sections (103).

2. The stiffness conversion valve (100) according to claim 1, wherein the valve rod (61) is welded to the side wall of the first hole (11).

3. The stiffness conversion valve (100) according to claim 1 or 2, wherein a part of the valve rod (61) that is accommodated in the first hole (11) is a first rod segment (611), and the cross-sectional area of the first hole (11) is greater than a cross-sectional area of the first rod segment (611) on any one of the first cross sections (103) that passes through the first rod segment (611).

4. The stiffness conversion valve (100) according to claim 3, wherein on any one of the first cross sections (103) that passes through the first rod segment (611), a shape of a cross section of the first rod segment (611) is circular, and a shape of a cross section of the first hole (11) is an axisymmetric shape.

5. The stiffness conversion valve (100) according to claim 4, wherein the cross section of the first hole (11) comprises at least two arc-shaped segments (110) with different curvatures.

6. The stiffness conversion valve (100) according to claim 5, wherein the cross section of the first hole (11) comprises two first arc-shaped segments (111) and two second arc-shaped segments (112), a curvature of each of the first arc-shaped segments (111) is less than a curvature of each of the second arc-shaped segments (112), and the first arc-shaped segments (111) and the second arc-shaped segments (112) are alternately connected in sequence.

7. The stiffness conversion valve (100) according to claim 5 or 6, wherein the side wall of the first hole (11) comprises a first part (113) welded to the first rod segment (611) and a second part (114) having a gap with the first rod segment (611), and a curvature of the first part (113) is less than a curvature of the second part (114).

8. The stiffness conversion valve (100) according to any one of claims 1 to 7, wherein the first hole (11) comprises a first sub-hole (115) and a second sub-hole (116), the first sub-hole (115) is spaced apart from the second sub-hole (116), and a side wall of the first sub-hole (115) communicates with a side wall of the second sub-hole (116) through a through hole (12).

9. The stiffness conversion valve (100) according to any one of claims 1 to 8, wherein the valve core (10) is disposed in a valve core accommodating cavity (20) of the stiffness conversion valve (100), the valve core accommodating cavity (20) is separated into a first sub-chamber (21) and a second sub-chamber (22), and the first sub-chamber (21) communicates with the second sub-chamber (22) through the first hole (11).

10. The stiffness conversion valve (100) according to any one of claims 1, 2, 8, and 9, wherein the part of the valve rod (61) that is accommodated in the first hole (11) is the first rod segment (611), and the cross-sectional area of the first hole (11) is equal to the cross-sectional area of the valve rod (61) on some of the plurality of first cross sections (103) that pass through the first rod segment (611).

11. The stiffness conversion valve according to any one of claims 1 to 10, wherein the first hole (11) comprises at least a first segment (117) and a second segment (118) in an axial direction of the valve rod (61), a cross-sectional area of the first segment (117) is less than a cross-sectional area of the second segment (118), and a side wall of the first segment (117) is welded to the valve rod (61).

12. A valve core (10), wherein the valve core (10) is the valve core (10) of the stiffness conversion valve (100) according to any one of claims 1 to 11.

13. An air spring (200), comprising a housing (210) and the stiffness conversion valve (100) according to any one of claims 1 to 11, the stiffness conversion valve (100) being disposed in the housing (210); and
a main air chamber (211) and an auxiliary air chamber (212) being disposed inside the housing (210), the main air chamber (211) communicating with the auxiliary air chamber (212) through a gas passage (213), and the stiffness conversion valve (100) being configured to implement opening or cutting off of the gas passage (213).

14. A suspension system (300), comprising the air spring (200) according to claim 13.

15. A vehicle (400), comprising:
the suspension system (300) according to claim 14, or
the air spring (200) according to claim 13; or
the stiffness conversion valve (100) according to any one of claims 1 to 11.
